# EUROPEAN PATENT SPECIFICATION

(11) **EP 4 095 511 B1**
(45) Date of publication and mention of the grant of the patent: **22.11.2023**
(21) Application number: 21176299.2
(22) Date of filing: 27.05.2021
(51) Int. Cl.: G01N 9/06

(54) **DENSITY METER**
DICHTEMESSER
DENSIMÈTRE

(43) Date of publication of application: 30.11.2022
(73) Proprietor: Alia Instruments Holding B.V., 7521 PH Enschede (NL)
(72) Inventor: Peters, Jan, 7325 NH Apeldoorn (NL)
(74) Representative: 't Jong, Bastiaan Jacob

(56) References cited:
- EP-A1- 3 438 642
- EP-A1- 3 598 101
- WO-A1-98/26205
- US-A- 5 573 282
- US-A1- 2004 164 554

## Description

The invention relates to a density meter according to the preamble of claim 1.

Such a density meter is for example known from EP 3438642. These known density meters are used on, for example, a dredging vessel to determine the efficiency of the dredging. The sensor could be a force sensor, as described in EP 3438642, but could also be an active sensor having an actuator, which imposes a force, and an accellerometer, which measures the response of the imposed force.

The flexible sleeve is subjected to wear due to the sand, stones and rocks in the slurry. So, after some time the flexible sleeve needs to be exchanged.

Typically, the whole density meter is exchanged, but it is also possible to only exchange the flexible sleeve. In order to do so, the feed pipe and discharge pipe are unmounted from the flanged pipe couplings. The whole density meter or only the flexible sleeve is exchanged and then the feed pipe and discharge pipe are mounted again to the flanged pipe couplings.

When the pipes are mounted again bolts are tightened to press the flange of a pipe against the flange of the flanged pipe coupling. The flange of the flexible sleeve is positioned between these two flanges in order to provide for a seal.

If the bolts are tightened to firmly, the flange of the flexible sleeve will squeezed and will start bulging beyond the circumference of the flange, but also inwardly into the channel of the flexible sleeve. The bulging into the channel of the flexible sleeve will reduce the flow opening, which will influence the measurements of the density meter. The locally reduced flow opening will also cause additional wear to the flexible sleeve, which will negatively impact the lifespan of the flexible sleeve.

It is an object of the invention to reduce or even remove the above mentioned disadvantages.

This object is achieved with a density meter according to claim 1.

The spacer ring will limit the amount of compression of the flange of the flexible sleeve. When the bolts of the flanged pipe coupling are tightened, the outer annular portion will be compressed until the spacer ring is clamped between the flange of the pipe and the flange of the flanged pipe coupling. This will ensure that the deformation of the outer annular portion is defined and a predefined sealing is provided, without any undesired bulging of the flange of the flexible sleeve.

The inner annular portion will prevent that any bulging of the outer annular portion can be compensated for, without any deformation of the flow opening.

The thickness of the spacer ring can be chosen to be somewhat smaller than the first thickness, such that the inner annular portion is also somewhat compressed between the flange of the pipe and the flange of the flanged pipe coupling. This will ensure that fluid flowing under pressure through the flexible sleeve cannot penetrate between the flanges, which would negatively impact the sealing of the coupling.

A number of cord loops extend in the axial plane partially out of the outer annular portion.

The cord loops allow for wiring or hoses to be fixed to the density meter, but also allow for better handling of the flexible sleeve, when assembling or disassembling a density meter according to the invention.

Preferably, each spacer ring is integrated with the respective flanged pipe coupling. By integrating the spacer ring with the respective flanged pipe coupling, mounting of a feed pipe or discharge pipe is simplified as less parts need to be aligned.

In a preferred embodiment of the density meter according to the invention the difference between the first thickness and the second thickness is in the range of 1mm up to 6mm.

With this difference in thickness a reliable sealing is typically obtained for pipes transporting slurry.

In a further preferred embodiment of the density meter according to the invention a transition annular portion is arranged between the inner annular portion and the outer annular portion for providing a transition between the first thickness and the second thickness.

The transition annular portion provides for a smooth change between the thickness of the inner annular portion and the outer annular portion. This ensures that the flange of the flexible sleeve can take up changes in stress due to the compressing of the outer annular portion.

In yet another embodiment of the density meter according to the invention two cylindrical bands are embedded in the flexible sleeve, which cylindrical bands comprises cords, such as steel wires, having at least a tangential direction component, wherein the cylindrical bands are positioned in the flexible sleeve each at a spacing between the pipe part and a flanged pipe coupling.

The flexible sleeve is supported against the pressure of the fluid flowing through the flexible sleeve by the two flanged pipe couplings and the pipe part. However, there is a spacing between the pipe part and the two flanged pipe couplings, where the flexible sleeve is not supported. This could lead to some expansion of the sleeve at those two positions, which could increase the wear of the flexible sleeve.

By embedding the cylindrical bands, the expansion of the flexible sleeve is counteracted.

The invention further relates to a method for positioning a flexible sleeve to extend through both pipe couplings and the pipe part in a density meter in which the flexible sleeve is provided with cord loops as described above, which method comprises the steps of:
- pulling the cord loops of one flange in radial direction towards the axis of the flexible sleeve in order to fold the flange in a cone-like shape;
- pulling the flexible sleeve in axial direction through one of the flanged pipe couplings, through the pipe part and through the other of the flanged pipe couplings, while maintaining the flange in the cone-like shape;
- releasing the cord loops, such that the one flange of the flexible sleeve folds back to abut against the flange of the respective flanged pipe coupling.

This method can easily be performed by mounting a winch on the flange of a first pipe coupling and feeding the cable of the winch through the pipe portion and the second pipe coupling. The cable is then connected to the cord loops of the flexible sleeve, such that the flexible sleeve can be pulled into the housing of the density sensor by the winch.

These and other features of the invention will be elucidated in conjunction with the accompanying drawings.
Figure 1 shows a cross-sectional view of an embodiment of a density meter according to the invention.
Figure 2 shows a detailed cross-sectional view of the flanged pipe coupling of the density meter according to figure 1 in unmounted state.
Figure 3 shows a detailed cross-sectional view of the flanged pipe coupling of the density meter according to figure 2 in mounted state.
Figures 4A - 4C show an embodiment of the method according to the invention.

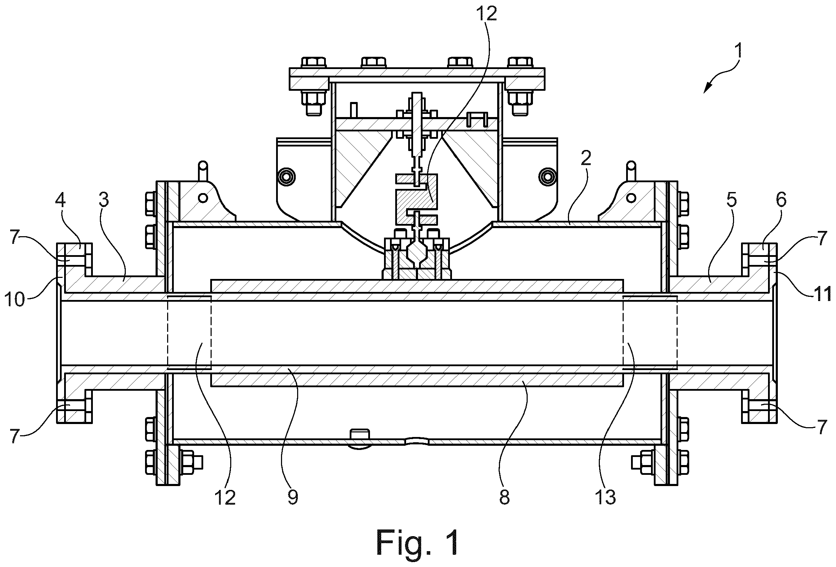

Figure 1 shows a density meter 1 according to the invention. The density meter 1 has a housing 2 with on opposite sides twe flanged pipe couplings 3, 4 and 5, 6. Each flanged pipe coupling has a tubular body 3, 5 and a flange 4, 6 with opening 7 for mounting bolts.

A pipe part 8 is arranged inside of the housing 2 and extends between the two pipe couplings 3, 4, 5, 6. Furthermore, a flexible sleeve 9 having on both ends flanges 10, 11 extends through the two pipe couplings 3, 4, 5, 6 and the pipe part 8.

A force sensor 12 is arranged between the pipe part 8 and the housing 2. This force sensor 12 is connected to computing means (not shown) to calculate the density of the slurry flowing through the flexible sleeve 9.

A cylindrical bands 12, 13 of cords are embedded in the flexible sleeve 9 to bridge the spacing between the pipe part 8 and the two flanged pipe couplings 3, 4, 5, 6 respectively.

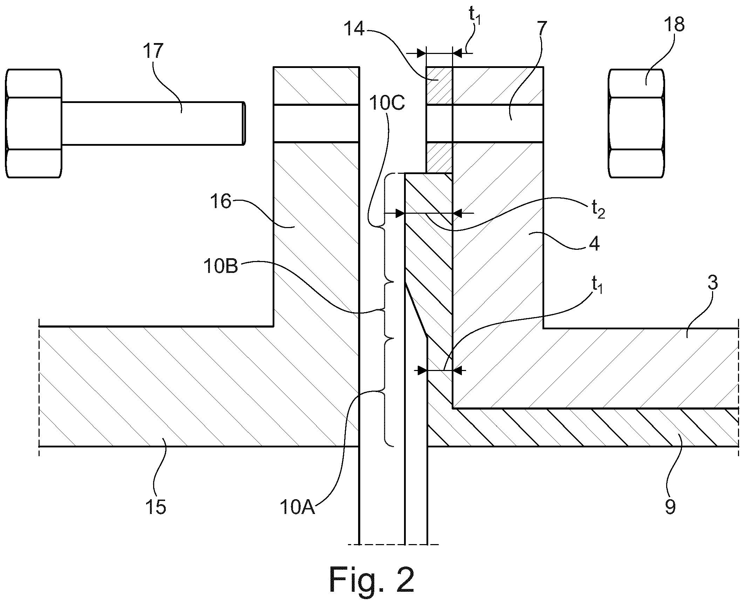

Figure 2 shows a detailed cross-sectional view of the flanged pipe coupling 3, 4 of the density meter 1 according to figure 1 in unmounted state.

The flexible sleeve 9 has a flange 10 comprising an inner annular portion 10A, a transition annular portion 10B and an outer annular portion 10C. The inner annular portion 10A has a thickness t1, while the outer annular portion 10C has a thickness t2.

A spacer ring 14 is arranged around the flange 10 and has a thickness t1, the same as the inner annular portion 10A.

Figure 2 shows furthermore a feed/discharge pipe 15 with a flange 16 as well as a bolt 17 and nut 18.

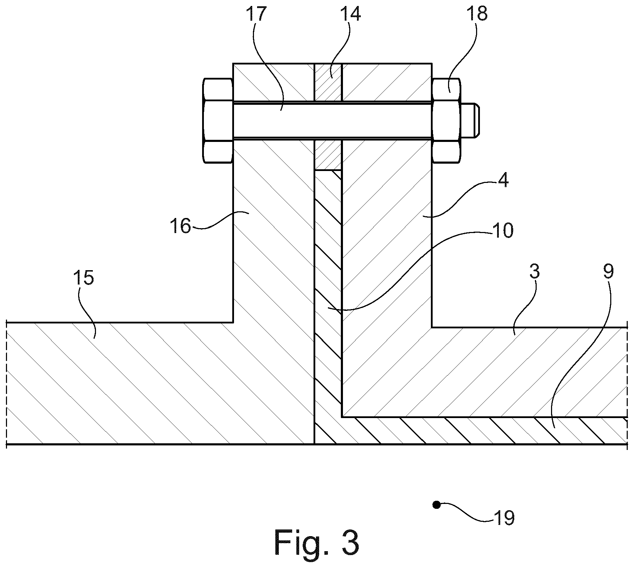

Figure 3 shows a detailed cross-sectional view of the flanged pipe coupling of the density meter according to figure 2 in mounted state. The flange 16 is mounted against the flange 4 by bolt 17 and nut 18, such that the flange 10 of the flexible sleeve 9 is clamped in between. Due to the spacer ring 14, the compression is limited, such that only the outer annular portion of the flange 10 is firmly compressed to provide a seal, while the inner annular portion of the flange 10 is virtually untouched. This ensures that the flange 10 of the flexible sleeve 9 will not bulge into the channel 19 of the density meter 1.

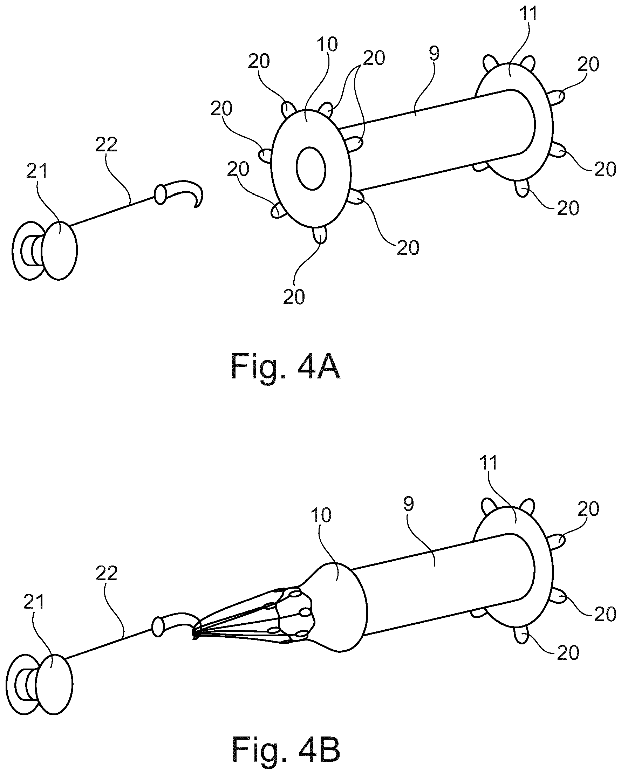

Figure 4A shows a first step of an embodiment of the method according to the invention for positioning the flexible sleeve 9 into the density meter 1 of figure 1.

The flexible sleeve 9 is provided with a number of cord loops 20, which are partially embedded into the flexible sleeve 9 and partially extend from the circumference of the flanges 10, 11. Furthermore, a winch 21 with a cable 22 is provided.

Figure 4B shows a second step of the method, in which the cable 22 is connected to the number of cord loops 20 at the flange 10, such that the flange 10 is folded into a cone shape.

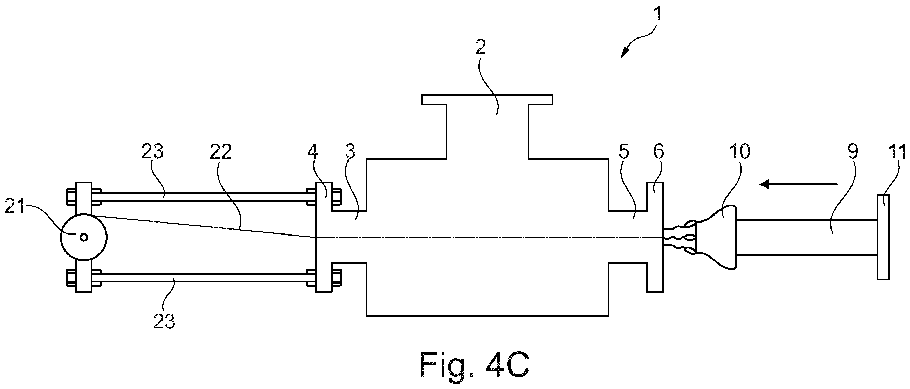

Figure 4C shows the third step of the method, in which the cable 22 extends through the two flanged pipe couplings 3, 4, 5, 6 of the housing 2. By operating the winch 21, the flexible sleeve 9 is pulled into the housing 2 and both flanged pipe couplings 3, 4, 5, 6.

The winch 21 can be mounted onto a flange 4 of the density meter 1 by pull rods 23.

This same method can also be used for removing the flexible sleeve 9 from the housing 2 by pulling the sleeve 9 out of the housing 2 with the winch 21.

## Claims

1. Density meter (1) for slurry which is transported through pipes, the density meter (1) comprising:
- a housing (2) having, on opposites sides of the housing (2), two flanged pipe couplings (3, 4, 5, 6) for coupling of a feed pipe and a discharge pipe;
- a pipe part (8) housed in the housing and extending between and spaced apart from the two flanged pipe couplings (3, 4, 5, 6);
- a flexible sleeve (9) having on both ends a flange (10, 11), which flexible sleeve (9) extends through both pipe couplings (3, 4, 5, 6) and the pipe part (8) and wherein the flanges (10, 11) of the flexible sleeve (9) abut against the flange of the respective flanged pipe coupling (3, 4, 5, 6); and
- a sensor (12) arranged to the pipe part (8) and computing means for computing the density of the slurry in the pipe part (8) at least on the basis of the volume of the pipe part (8) and measurements of the sensor (12);
wherein each flange (10, 11) of the flexible sleeve (9) has an inner annular portion (10A) of a first thickness (t₁)
**characterized in that**
each flange (10, 11) of the flexible sleeve (9) has an outer annular portion (10C) of a second thickness (t₂), wherein the first thickness (t₁) is smaller than the second thickness (t₂); and
**in that** a spacer ring (14) is provided around each flange (10, 11) of the flexible sleeve (9) and wherein the spacer ring (14) abuts against the flange of the respective flanged pipe coupling (3, 4, 5, 6), which spacer ring (14) has a thickness of the first thickness (t₁) or less,
wherein the flexible sleeve (9) is of a reinforced rubber, such as natural rubber or Styrol Butadiene Rubber with embedded nylon cords, and
wherein a number of cord loops (20) extend in the axial plane partially out of the outer annular portion (10C).

2. Density meter (1) according to claim 1, wherein each spacer ring (14) is integrated with the respective flanged pipe coupling (3, 4, 5, 6).

3. Density meter (1) according to claim 1 or 2, wherein the difference between the first thickness (t₁) and the second thickness (t₂) is in the range of 1mm up to 6mm.

4. Density meter (1) according to any of the preceding claims, wherein a transition annular portion (10B) is arranged between the inner annular portion (10A) and the outer annular portion (10C) for providing a transition between the first thickness (t₁) and the second thickness (t₂).

5. Density meter (1) according to any of the preceding claims, wherein two cylindrical bands (12, 13) are embedded in the flexible sleeve (9), which cylindrical bands (12, 13) comprises cords, such as steel wires, having at least a tangential direction component, wherein the cylindrical bands (12, 13) are positioned in the flexible sleeve (9) each at a spacing between the pipe part (8) and a flanged pipe coupling (3, 4, 5, 6).

6. Method for positioning a flexible sleeve (9) to extend through both pipe couplings (3, 4, 5, 6) and the pipe part (8) in a density meter (1) according to any of the preceding claims, which method comprises the steps of:
- pulling the cord loops (20) of one flange (10, 11) in radial direction towards the axis of the flexible sleeve (9) in order to fold the flange (10, 11)in a cone-like shape;
- pulling the flexible sleeve (9) in axial direction through one of the flanged pipe couplings (3, 4, 5, 6), through the pipe part (8) and through the other of the flanged pipe couplings (3, 4, 5, 6), while maintaining the flange (10, 11) in the cone-like shape;
- releasing the cord loops (20), such that the one flange (10, 11) of the flexible sleeve (9) folds back to abut against the flange of the respective flanged pipe coupling (3, 4, 5, 6).

## Patentansprüche

1. Dichtemesser (1) für Aufschlämmung, die durch Rohre transportiert wird, wobei der Dichtemesser (1) umfasst:
- ein Gehäuse (2), das auf entgegengesetzten Seiten des Gehäuses (2) zwei Flanschrohrkopplungen (3, 4, 5, 6) zum Koppeln eines Zulaufrohrs und eines Abflussrohrs aufweist;
- ein Rohrteil (8), das in dem Gehäuse untergebracht ist und sich zwischen den beiden Flanschrohrkopplungen (3, 4, 5, 6) erstreckt und von diesen beabstandet ist;
- eine flexible Hülse (9), die an beiden Enden einen Flansch (10, 11) aufweist, wobei sich die flexible Hülse (9) durch beide Rohrkopplungen (3, 4, 5, 6) und das Rohrteil (8) erstreckt, und wobei die Flansche (10, 11) der flexiblen Hülse (9) an dem Flansch der jeweiligen Flanschrohrkopplung (3, 4, 5, 6) anliegen; und
- einen an dem Rohrteil (8) angeordneten Sensor (12) und Rechenmittel zum Berechnen der Dichte der Aufschlämmung in dem Rohrteil (8) mindestens auf der Grundlage des Volumens des Rohrteils (8) und von Messungen des Sensors (12);
wobei jeder Flansch (10, 11) der flexiblen Hülse (9) einen inneren ringförmigen Abschnitt (10A) mit einer ersten Dicke (t₁) aufweist,
**dadurch gekennzeichnet, dass**
jeder Flansch (10, 11) der flexiblen Hülse (9) einen äußeren ringförmigen Abschnitt (10C) mit einer zweiten Dicke (t₂) aufweist, wobei die erste Dicke (t₁) kleiner als die zweite Dicke (t₂) ist; und
dass um jeden Flansch (10, 11) der flexiblen Hülse (9) ein Beabstandungsring (14) bereitgestellt ist und wobei der Beabstandungsring (14) an dem Flansch der jeweiligen Flanschrohrkopplung (3, 4, 5, 6) anliegt, wobei der Beabstandungsring (14) eine Dicke der ersten Dicke (t₁) oder weniger aufweist,
wobei die flexible Hülse (9) aus einem verstärkten Gummi besteht, beispielsweise Naturkautschuk oder Styrol-Butadien-Kautschuk mit eingebetteten Nylonschnüren, und
wobei sich eine Anzahl von Schnurschlaufen (20) in der axialen Ebene teilweise aus dem äußeren ringförmigen Abschnitt (10C) erstreckt.

2. Dichtemessgerät (1) nach Anspruch 1, wobei jeder Beabstandungsring (14) in die jeweilige Flanschrohrkopplung (3, 4, 5, 6) integriert ist.

3. Dichtemessgerät (1) nach Anspruch 1 oder 2, wobei die Differenz zwischen der ersten Dicke (t₁) und der zweiten Dicke (t₂) in dem Bereich von 1 mm bis 6 mm liegt.

4. Dichtemessgerät (1) nach einem der vorstehenden Ansprüche, wobei ein ringförmiger Übergangsabschnitt (10B) zwischen dem inneren ringförmigen Abschnitt (10A) und dem äußeren ringförmigen Abschnitt (10C) eingerichtet ist, um einen Übergang zwischen der ersten Dicke (t₁) und der zweiten Dicke (t₂) bereitzustellen.

5. Dichtemessgerät (1) nach einem der vorstehenden Ansprüche, wobei in der flexiblen Hülse (9) zwei zylindrische Bänder (12, 13) eingebettet sind, wobei die zylindrischen Bänder (12, 13) Schnüre, wie etwa Stahldrähte aufweisen, die mindestens eine tangentiale Richtungskomponente aufweisen, wobei die zylindrischen Bänder (12, 13) in der flexiblen Hülse (9) jeweils an einer Beabstandung zwischen dem Rohrteil (8) und einer Flanschrohrkopplung (3, 4, 5, 6) positioniert sind.

6. Verfahren zum Positionieren einer flexiblen Hülse (9), die sich durch beide Rohrkopplungen (3, 4, 5, 6) und den Rohrteil (8) in einem Dichtemessgerät (1) nach einem der vorstehenden Ansprüche erstreckt, wobei das Verfahren die folgenden Schritte umfasst:
- Ziehen der Schnurschlaufen (20) eines Flansches (10, 11) in radialer Richtung zu der Achse der flexiblen Hülse (9), um den Flansch (10, 11) kegelförmig zu falten;
- Ziehen der flexiblen Hülse (9) in axialer Richtung durch eine der Flanschrohrkopplungen (3, 4, 5, 6), durch das Rohrteil (8) und durch die andere der Flanschrohrkopplungen (3, 4, 5, 6), während der Flansch (10, 11) in der kegelförmigen Form gehalten wird;
- Lösen der Schnurschlaufen (20) derart, dass der eine Flansch (10, 11) der flexiblen Hülse (9) zurückklappt, um an dem Flansch der jeweiligen Flanschrohrkupplung (3, 4, 5, 6) anzuliegen.

## Revendications

1. Densimètre (1) pour une boue qui est transportée à travers des tuyaux, le densimètre (1) comprenant :
- un boîtier (2) présentant, sur des côtés opposés du boîtier (2), deux raccords de tuyau à brides (3, 4, 5, 6) pour le couplage d'un tuyau d'alimentation et d'un tuyau d'évacuation ;
- une partie de tuyau (8) logée dans le boîtier et s'étendant entre et espacée des deux raccords de tuyau à brides (3, 4, 5, 6) ;
- un manchon flexible (9) présentant aux deux extrémités une bride (10, 11), lequel manchon flexible (9) s'étend à travers les deux raccords de tuyau (3, 4, 5, 6) et la partie de tuyau (8) et dans lequel les brides (10, 11) du manchon flexible (9) viennent en butée contre la bride du raccord de tuyau à brides respectif (3, 4, 5, 6) ; et
- un capteur (12) agencé sur la partie de tuyau (8) et des moyens de calcul pour calculer la densité de la boue dans la partie de tuyau (8) au moins sur la base du volume de la partie de tuyau (8) et de mesures du capteur (12) ;
dans lequel chaque bride (10, 11) du manchon flexible (9) présente une partie annulaire interne (10A) d'une première épaisseur (t₁)
**caractérisé en ce que**
chaque bride (10, 11) du manchon flexible (9) présente une partie annulaire externe (10C) d'une seconde épaisseur (t₂), dans lequel la première épaisseur (t₁) est inférieure à la seconde épaisseur (t₂) ; et
**en ce qu'**une bague-entretoise (14) est fournie autour de chaque bride (10, 11) du manchon flexible (9) et dans lequel la bague-entretoise (14) vient en butée contre la bride du raccord de tuyau à brides respectif (3, 4, 5, 6), laquelle bague-entretoise (14) présente une épaisseur inférieure ou égale à la première épaisseur (t₁),
dans lequel le manchon flexible (9) est constitué d'un caoutchouc renforcé, tel que du caoutchouc naturel ou du caoutchouc styrène-butadiène avec des cordons en nylon incorporés, et
dans lequel un certain nombre de boucles de cordon (20) s'étendent dans le plan axial partiellement hors de la partie annulaire externe (10C).

2. Densimètre (1) selon la revendication 1, dans lequel chaque bague entretoise (14) est intégrée au raccord de tuyau à brides respectif (3, 4, 5, 6).

3. Densimètre (1) selon la revendication 1 ou 2, dans lequel la différence entre la première épaisseur (t₁) et la seconde épaisseur (t₂) se situe dans la plage allant de 1 mm jusqu'à 6 mm.

4. Densimètre (1) selon l'une quelconque des revendications précédentes, dans lequel une partie annulaire de transition (10B) est agencée entre la partie annulaire interne (10A) et la partie annulaire externe (10C) pour assurer une transition entre la première épaisseur (t₁) et la seconde épaisseur (t₂).

5. Densimètre (1) selon l'une quelconque des revendications précédentes, dans lequel deux bandes cylindriques (12, 13) sont incorporées dans le manchon flexible (9), lesquelles bandes cylindriques (12, 13) comprennent des cordons, tels que des fils d'acier, présentant au moins une composante de direction tangentielle, dans lequel les bandes cylindriques (12, 13) sont positionnées dans le manchon flexible (9) chacune à un intervalle entre la partie de tuyau (8) et un raccord de tuyau à brides (3, 4, 5, 6).

6. Procédé de positionnement d'un manchon flexible (9) pour qu'il s'étende à travers à la fois des raccords de tuyau (3, 4, 5, 6) et la partie de tuyau (8) dans un densimètre (1) selon l'une quelconque des revendications précédentes, lequel procédé comprend le étapes consistant à :
- tirer les boucles de cordon (20) d'une bride (10, 11) dans une direction radiale vers l'axe du manchon flexible (9) afin de plier la bride (10, 11) en forme conique ;
- tirer le manchon flexible (9) dans une direction axiale à travers l'un des raccords de tuyau à brides (3, 4, 5, 6), à travers la partie de tuyau (8) et à travers l'autre des raccords de tuyau à brides (3, 4, 5, 6), tout en maintenant la bride (10, 11) en forme conique ;
- libérer les boucles de cordon (20), de telle sorte que la bride (10, 11) du manchon flexible (9) se replie pour venir en butée contre la bride du raccord de tuyau à brides respectif (3, 4, 5, 6).
